# EUROPEAN PATENT SPECIFICATION

(11) **EP 2 084 040 B1**
(45) Date of publication and mention of the grant of the patent: **24.11.2010**
(21) Application number: 07839256.0
(22) Date of filing: 04.10.2007
(51) Int. Cl.: B60R 21/207

(54) **SIDE AIRBAG MODULE**
SEITENAIRBAGMODUL
MODULE D'AIRBAG LATERAL

(30) Priority: 11.10.2006 US 829090 P
(43) Date of publication of application: 05.08.2009
(73) Proprietor: Key Safety Systems, Inc., Sterling Heights, MI 48313 (US)
(72) Inventor: WIPASURAMONTON, Pongdet, Rochester, MI 48307 (US); JU, Chang Hwan, Rochester, MI 48307 (US); COLBURN, Sara Amber, Sterling Heights, MI 48313 (US)
(74) Representative: Gislon, Gabriele
(86) International application number: PCT/US2007/021347
(87) International publication number: WO 2008/045300

(56) References cited:
- EP-A- 0 957 009
- WO-A-2006/091287
- KR-A- 20050 027 414
- US-A- 5 542 691
- US-A1- 2006 186 644
- US-B1- 6 224 092
- US-B1- 6 364 348

## Description

Most conventional soft pack side airbag modules have an electrical connector hidden inside the airbag. The inflator assembly and the electrical wire harness are first assembled and then placed inside the airbag. A similar device is known from the EP 0 957 009 A2. Such a design requires the airbag and inflator attachment to have a large opening for inflator insertion that is closed by fabric flaps. Such a design has a large amount of gas leakage around the inflator. The leakage is not consistent, if not uncontrollable, since the gas pressure at the initial stage of inflation is very high due to high gas inflation rate and small volume prior to unfolding of the airbag.

The new side airbag module disclosed herein solves these problems with the features of the characterizing portion of claim 1 - with further advantageously embodiments shown by the dependent claims with an exposed electrical connection, minimizing leakage and optimizes airbag strength. The exposed electrical connection may ease the assembly of the airbag module. The electrical wire harness with a connector can be routed in a vehicle seat prior to installation of the airbag module and is ready for connection to the exposed electrical connector on the airbag inflator. This may lead to lower assembly costs.
Figure 1 shows the main components of the new side impact airbag and cover.
Figure 1a shows the airbag and other parts of an airbag module.
Figure 2 shows components of the airbag.
Figure 2a is a plan view of the upper portion of the main airbag panel.
Figure 2b shows the reinforcement panel folded about a vertical axis.
Figure 2c shows the reinforcement panel folded a second time, this time about a horizontal axis.
Figure 2d shows the lower portion of the main panel secured to the upper portion of the main panel, as well as an internal tether.
Figure 2e shows an assembled airbag.
Figures 3a and 3b show an alternate embodiment.
Figure 4 shows an assembled airbag assembly for either embodiment folded over with an inflator installed in the airbag.
Figure 4a is a plan view showing the inflator installed in the airbag with an inflator retainer bracket holding the inflator.
Figure 5 shows a portion of the airbag with an inflator opening having a single integral tab or flap pushed through the larger opening of the airbag.
Figures 6 and 6a show an alternate way of providing an inflator seal.
Figure 7 is a perspective view of an inflator retainer bracket.
Figure 8 is a fragmentary close-up view of the inflator seal with the inflator in the airbag retained by the inflator retainer bracket.
Figure 9 is a side view of the components of Figure 8.
Figure 10 is a plan view of a domed-shaped washer with internal teeth or projections.
Figure 10a is a cross-section of the washer of Figure 10.
Figure 11 is a fragmentary side view showing the washer mounted on a connector-end of the inflator.

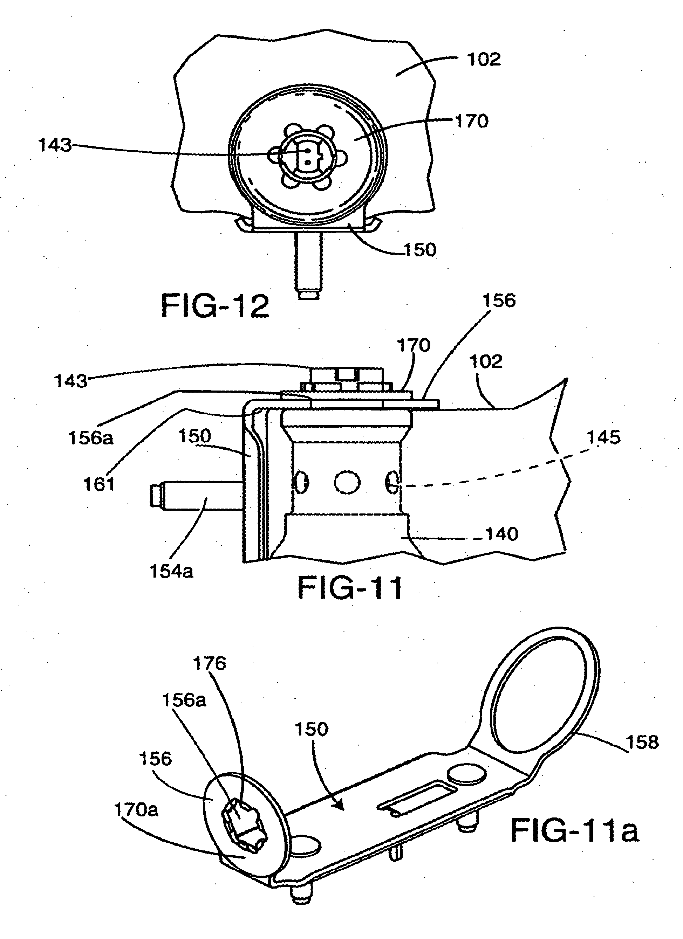

Figure 11 a shows an alternate inflator retainer bracket.
Figure 12 is an end view of the washer assembled with the inflator.

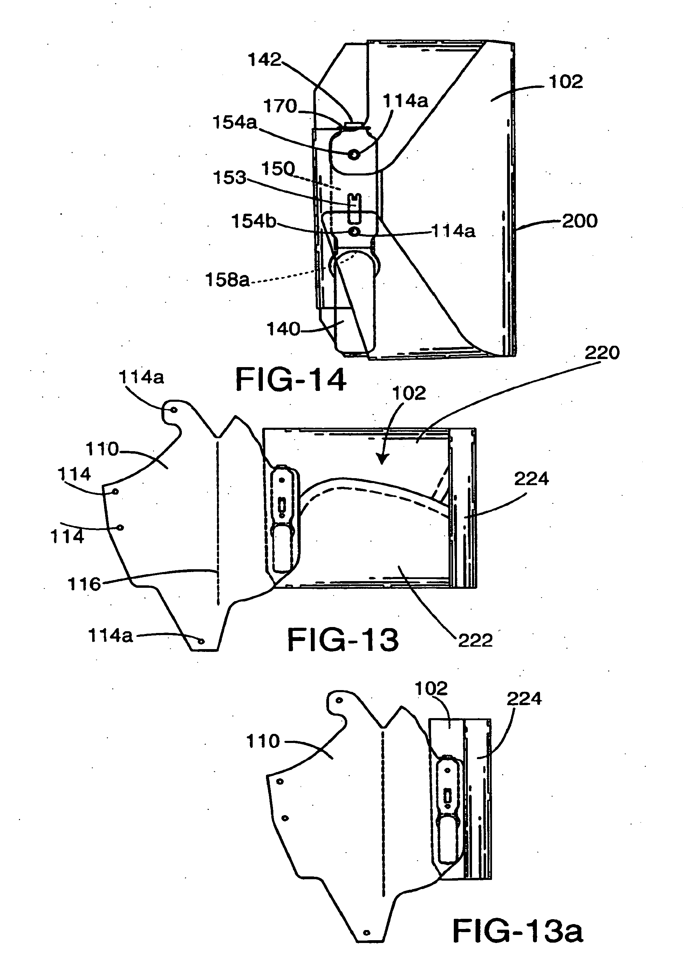

Figure 13 is a shows a partially folded airbag with the fabric cover positioned over the inflator.
Figure 13a shows the airbag more completely folded.
Figure 14 shows the inflator with the folded airbag adjacent the inflator and with the cover looped about the folded airbag and secured to the mounting studs of the inflator retainer bracket.

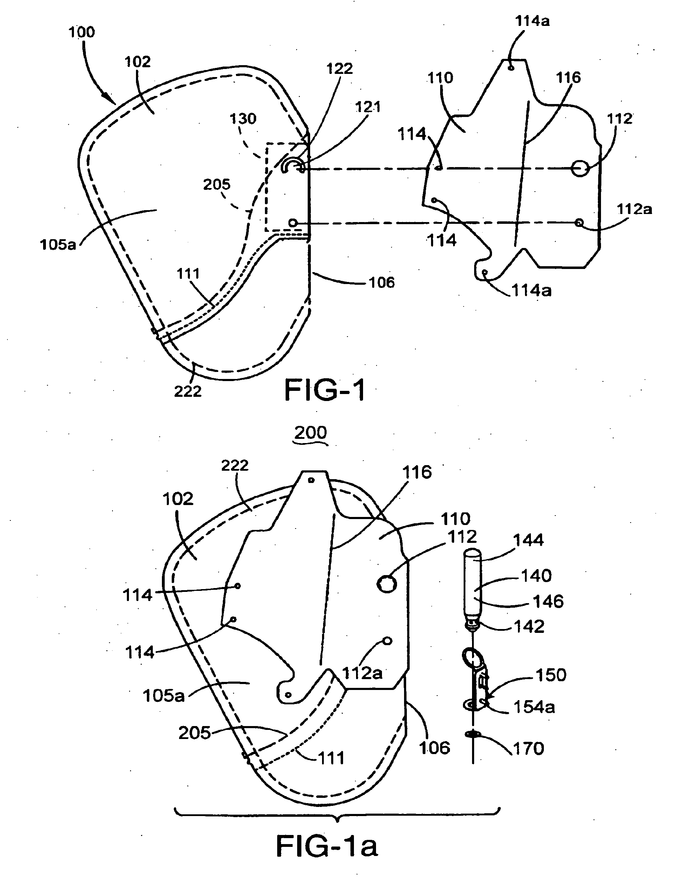

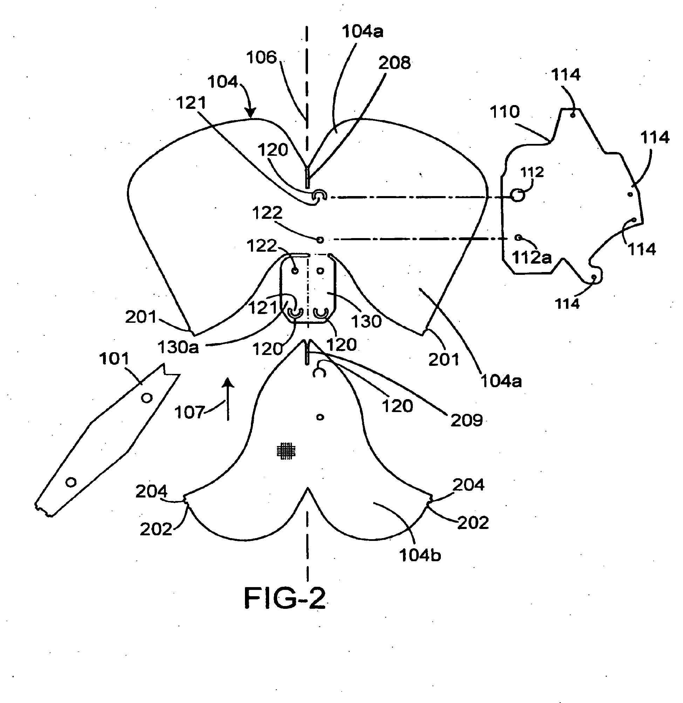

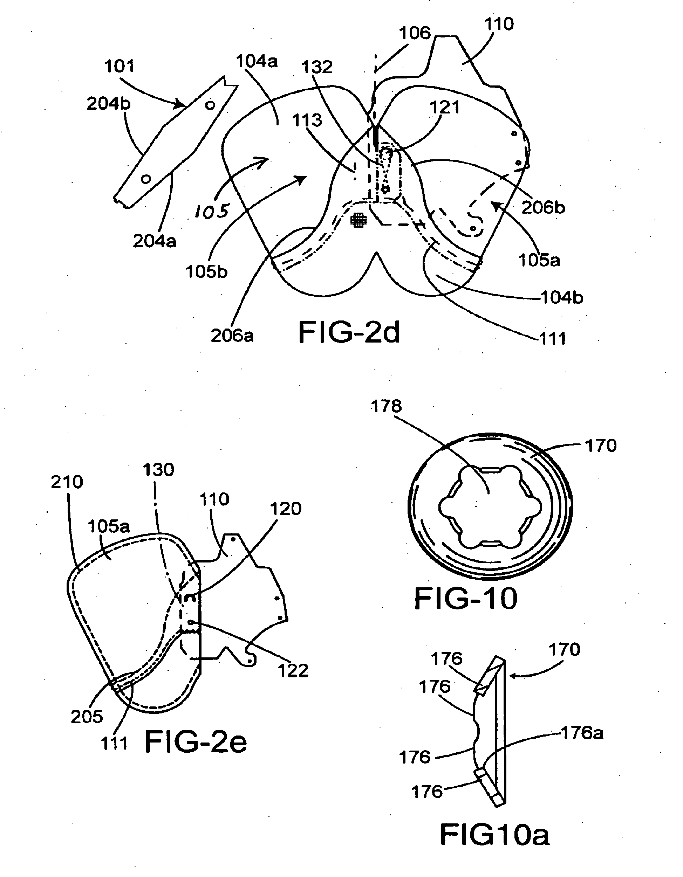

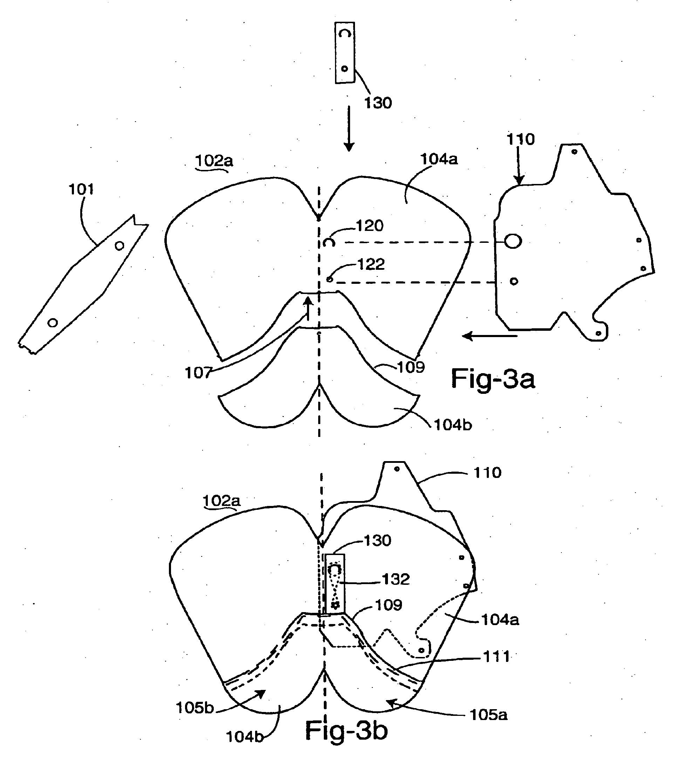

An airbag assembly 100 as shown in Figures 1 - 5 includes an inflatable airbag 102 and a panel of material used as a cover 110 to maintain a folded airbag in a folded condition. The cover can be made from a woven material or non-woven material, such as paper or Tyvek ^{®}, and includes a line or perforations116 or other another easily frangible feature. The cover 110 can be secured to a main panel 105 of the airbag to reduce the number of parts and subassemblies, as shown in Figures 2d and 3a, or kept as a separate part.

The cover 110 has a first set of openings therein including a large circular opening 112 and a smaller opening 112a. These openings 112, 112a in the cover receive portions of an inflator 140. The cover 110 has a second set of four openings 112, 114a therein that receive fasteners, such as a bolt of an inflator retainer bracket. If the cover does not receive an inflator through the openings 12, 112a, these opening can be omitted.

The airbag may have a single inflation chamber or multiple inflation chambers. When the airbag has multiple inflation chambers the interior of the airbag is partitioned by a tether 101 that is a separate panel of material. The tether 101 has openings therein to permit inflation gas to flow through the tether. The airbag can be separated into multiple inflation chambers by stitching the two sides of the main panel together using a line of stitches with large openings in the stitch line to permit inflator gas flow between the inflation chambers.

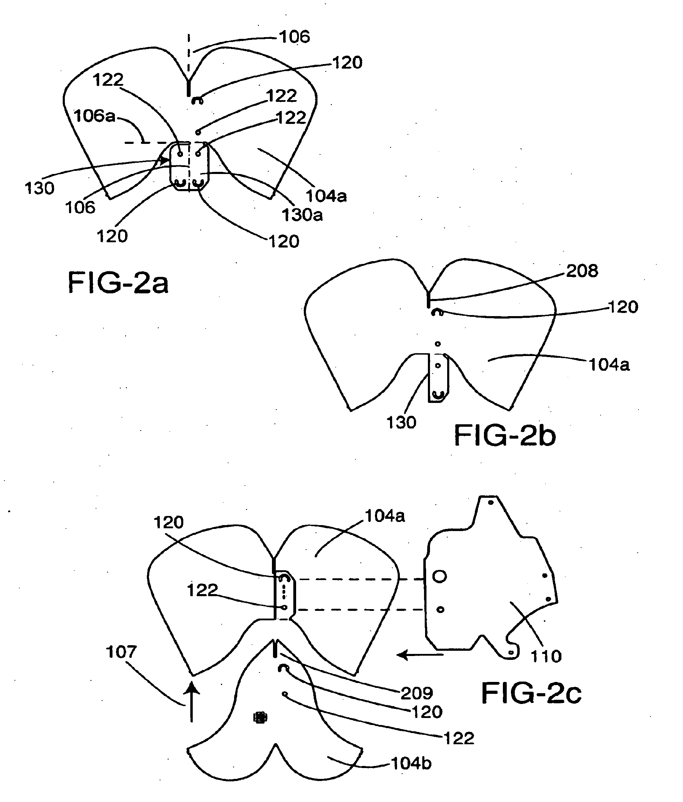

The main panel 105 may comprise a single sheet of fabric such as a woven uncoated fabric or a woven fabric coated to reduce the permeability of the fabric. Alternatively, as shown in Fig. 2d, the main panel 105 has an upper portion 104a formed of a woven uncoated fabric connected to a lower portion 104b formed of a woven coated fabric. The main panel is generally symmetric about a fold line or axis 106 as shown in Figure 2d, and divides the main panel into two substantially identical main panel halves 105a, 105b as shown in Figures 2d and 3a. In Figure 2 the components of an airbag 102, including the upper and lower portions 104a, 104b of the main panel, the tether 101, and the cover 110 are separated from each other. Arrow 107 shows the relative direction in which the lower portion 104b of the main panel is moved to partially overlie the lower regions of the upper portion 104a of the main panel.

The upper portion 104a of the main panel has a first opening such as a partial-circular slit 120 therein, the center portion thereof forming a bendable tab 121. The upper portion 104a of the main panel includes a second opening such as a circular opening 122 located below the first opening or slit 120. The centers of the openings 120, 122 correspond to the spacing between the centers of the openings 112, 112a of the cover 110. Each of the upper and lower portions 104a, 104b of the main panel includes alignment marks or manufacturing aids such as a small triangularly or rectangularly shaped extensions 201, 202, 204 of fabric. The lower portion 104b of the main panel includes the openings 120, 122; a bendable tab 121 is associated with each opening 120. In this embodiment the airbag includes an integrally formed reinforcement panel 130 having two sets of openings 120, 122. Before the lower portion 104b of the main panel is moved onto and sewn to the upper portion 104a of the main panel, the integral reinforcement panel 130 is folded and moved to its proper position. In the embodiment of Figures 3 and 3a the reinforcement panel is a separate panel. Figure 2a shows the upper portion 104a of the main panel in isolation, and in Figure 2b, the left hand portion 130a of the reinforcement panel has been folded over fold line 106 to yield a narrowed configuration. The reinforcement panel now has two layers of overlapping material with the two sets of openings 120, 122 and tabs 121 situated on top of each other. If such a level of reinforcement is not needed, the left hand side of the reinforcement panel can be omitted.

In Figure 2c the folded-over reinforcement of Figure 2b is again folded-over a horizontal axis or fold line 106a to the configuration shown in which the openings and tabs 120, 121, 122 in the reinforcement panel overlay the openings and tab in the upper portion 104a of the main panel. To maintain the reinforcement panel in the illustrated configuration it can be sewn to the upper portion 104a of the main panel or left free.

In Figure 2c, arrow 107 indicates that the lower portion 104b of the main panel will be moved to overlay the upper portion 104a of the main panel. In Figure 2d the openings 120, 122 of the lower portion of the main panel are aligned with the openings 120, 122 of the reinforcement panel and upper portion 104a of the main panel, and the lower portion 104b of the main panel is sewn to the upper portion 104a of the main panel along a seam 111. In Figure 2c the cover 110 is shown displaced from the upper portion 104a of the main panel. The cover can be slid below the upper portion of the main panel as shown in Figure 2d and can be sewn to the upper portion 104a of the main panel by a short line of stitches 113 that may be arranged in a figure-8 pattern so that the cover 110 can be considered a part of the main panel. The cover 110 can remain unattached from the airbag in which case it is not sewn to the upper portion 104a of the main panel. There are now four layers of material that are aligned to each other and each has openings 120, 122 and a tab 121 that provide a robust reinforcement of this region of the airbag. These multiple panels are joined together by a figure-8 seam or stitch pattern 132 as shown in Figure 2d, which extends about all of the aligned openings 120, 122.

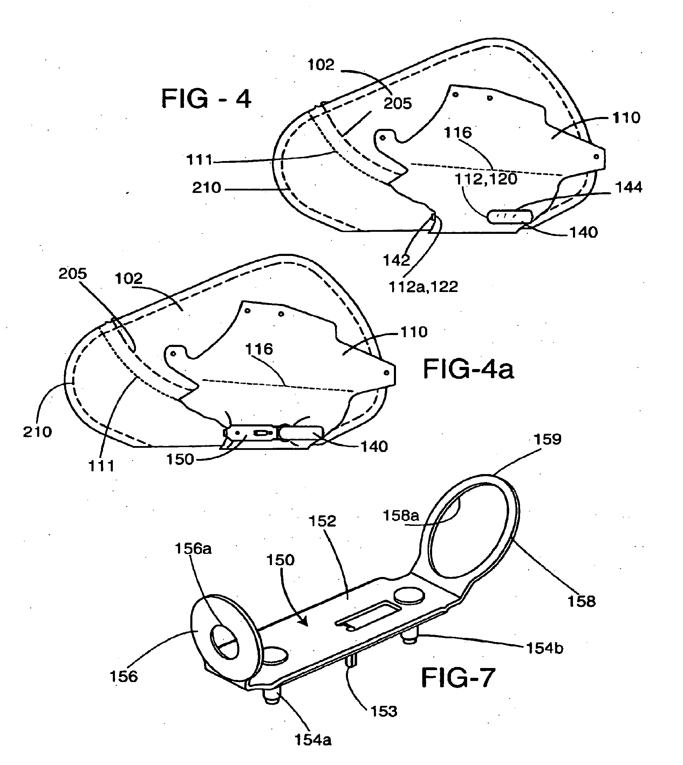

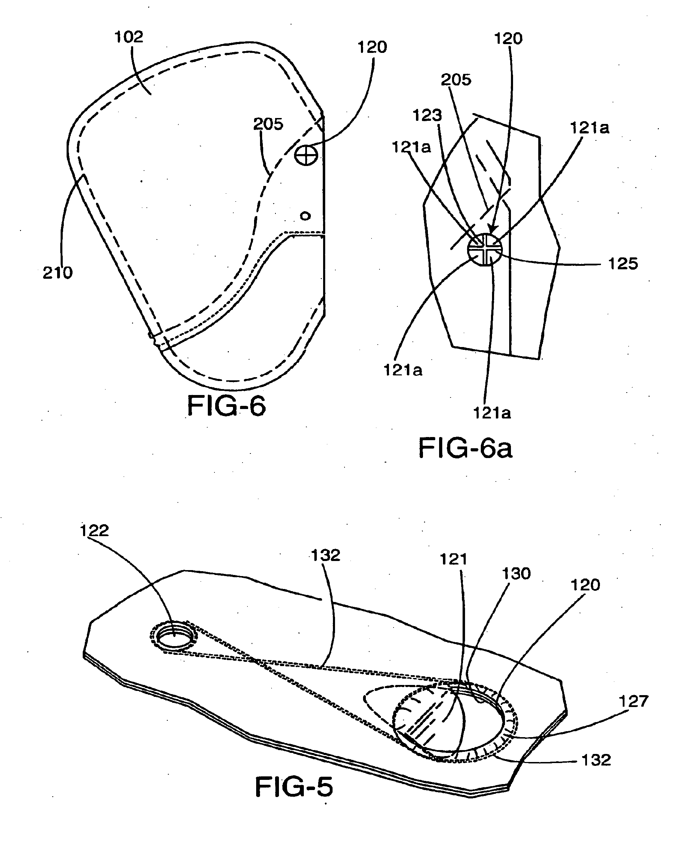

The tether 101 of Figure 2 is also shown in Figure 2d. An edge 204a of the tether is aligned to and sewn by stitches 205 to the edge 206a of the lower portion 104b of the main panel. The seam of stitches 205 extends through the upper portion 104a of the main panel, the lower portion 104b of the main panel and the tether 101 as shown in Figures 4, 4a and 6. With the edge 204a of the tether secured in place the airbag components are manipulated to permit another edge 204b of the tether to be aligned to and sewn by stitches 205 to the edge 206b of the lower portion 104b of the main panel. Subsequently, the configuration of Figure 2d is folded about the fold line 106 yielding the configuration of Figure 2e. An inspection of the above figures shows that the top sections of the upper and lower portions 104a, 104b of the main panel have slits 208, 209 therein. The slit fabric permits the opposing areas of each side of the upper and lower portions of the main panel to lie flat upon each other after the upper and lower portions are folded about the fold line 106 to provide a more compact configuration that is then sewn closed by a peripheral seam 210.

Figures 3a and 3b show an airbag 102a similar to the airbag 102 described above. In airbag 102 the reinforcement panel 130 is an integral part of the upper portion 104a and the lower portion 104b includes in its top portion the openings 120, 122 which add another layer of material to the reinforcement of the inflator receiving openings 120, 122 in the other panels. In this airbag 102a the integral reinforcement panel 130 has been replaced by a separate reinforcement panel 130. The openings 120, 122 have been removed and a top region of the lower portion 104b squared off. Neither the upper or lower portions include the splits or slit at their top. With the top region of the lower portion 104b removed there are fewer layers of material overlaying the openings 120, 122 on the upper portion 104a. If a tether 101 is used, it is sewn to the upper and lower portions at the same location shown in Figure 2d. The opposing portions of the assembled components shown in Figure 3a are substantially the same as illustrated in Figure 2d and when folded over the fold line 106 yield a configuration similar to that shown in Figures 2e, 4 and 4a.

In Figure 3a the upper edge109 of the lower portion 104b of the main panel rests above the lower edge of the upper portion 104a of the main panel. The upper and lower portions 104a, 104b of the main panel are sewn together along sew line or seam 111. The cover 110 can be sewn to the right half of the upper portion of the main panel with its openings 112, 112a aligned with the openings 120, 122. The cover can be sewn to the upper portion of the main panel in the same manner as mentioned in the first embodiment with a short line of stitches 113 or using the figure-8 pattern 132 so that the cover 110 can be considered a part of the main panel. The sewn-together panels are folded over the fold line 106 yielding a configuration similar to that shown in Figures 2e, 4 and 4a. The two main panel halves 105a, 105b are sewn together along a peripheral sewn seam 222. The peripheral sewn seam 222 used to close the panel halves 105a, 105b can be used to tack or sew an end portion of the cover to the panel-half 105a. The reinforcement panel 130 in this embodiment is a separate panel and has slots 120, 122 therein. During assembly the reinforcement panel 130 is moved upon the upper portion 104a with its openings 120, 122 aligned to similar openings 120, 122 in the upper portion 104a of the main panel. The reinforcement panel 130 can be secured to the upper portion 104a of the main panel by a separate seam such as a figure-8 loop that extends about openings 120, 122.

Figure 1 a shows the components of a side airbag module 200, which in addition to the airbag 102 and cover 110 includes an inflator 140, an inflator retainer bracket 150, and a lock washer 160. The side airbag module may include a wiring harness, which includes an electrical connector that connects through an electric terminal or connecter to an igniter, which is a part of the inflator.

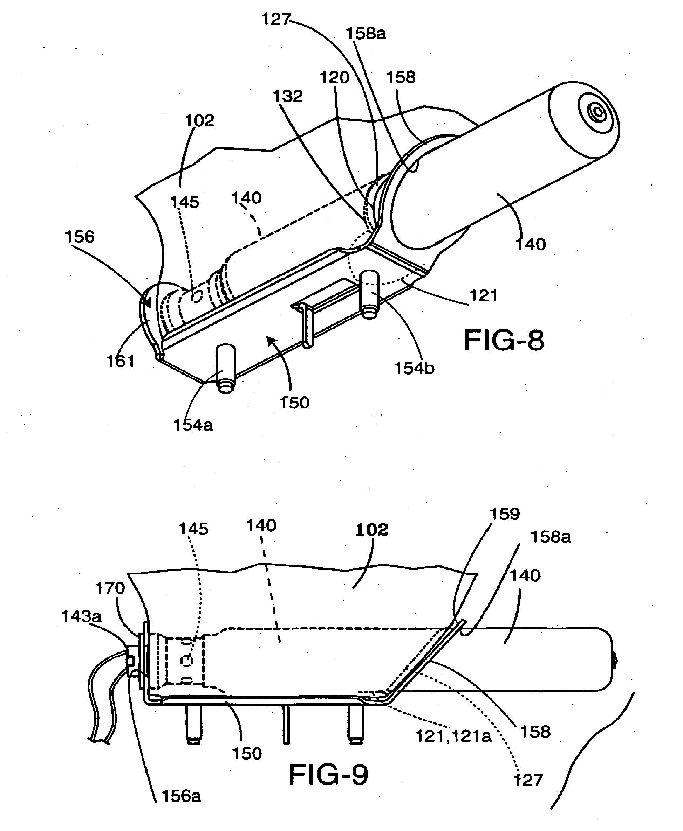

The airbag, in particular the main panel half 105a, provides a plurality of aligned large openings 120. smaller openings 122 and tabs 121. One or more of these other openings 120, 122 are included in the reinforcement panel 130 and the lower portion 104b of the main panel. These openings function as inflator receiving openings. If the cover includes openings 112, 112a these also function as inflator receiving openings. The aligned tabs 121 of the various panels when bent over form a self-sealing inflator seal against a portion of the exterior of the inflator 140. In Figure 5 the opening 120 is partially circular and has a diameter sized to allow for the stretching of the fabric to permit entry of the inflator. In Figure 5 the aligned tabs 121 are shown being pushed into the interior of the airbag. This orientation could be achieved if manually pushed in or if the tab were moved inwardly as the inflator is being moved into the opening 122. The reinforcement panel 130 and connecting figure-8 seam 132 are also shown in Figure 5. In Figure 5 the bent portion of the tab 121 is straight but that portion will conform to the circular shape of the walls of the inflator upon insertion of the inflator in opening 120. The material 127 between the edge of opening 120 and the stitches forming the seam 132 will be pushed and bent inwardly, as shown in Figure 5, upon insertion of the inflator. This bent material contributes to the seal about the inflator. The aligned tabs 121 form a seal along one side of the inflator 140, as also shown in Figures 8 and 9. Figure 6 shows an alternate configuration wherein the large opening 120 is formed by two crossing slits 123, 125. The slits form four tabs 121a in the shape of petals which petal inwardly and press on four sides of the body of the inflator to create another seal between the airbag and the inflator in the same manner as shown for the tab 121 in Figure 9.

The inflator140 as shown in Figures 1a, 4 and 4a includes a small or narrow end 142 near the inflator's integral electrical connector 143, a large end 144 and a center cylindrical hollow body 146 containing propellant and/or gas. Before the inflator 140 is inserted into the airbag the openings 112, 112a in the cover 110 are aligned with the openings 120, 122 in the main panel. This alignment should be automatic if the cover 110 is secured to the main panel. If the cover is not secured to the main panel, the cover is placed over the main panel half 105a and the openings 112-120 and 112a-122 are aligned.

The inflator 140 is placed inside the airbag in the following manner. The smaller end 142 of the inflator 140 is first positioned near the large opening 112 of the cover and pushed into the airbag through the opening 112 and through the slit 120, along with the opening 120 in any reinforcement panel. The inflator is then manipulated so the smaller end 142 extends out of the small and now aligned openings 122 and through opening 112a in the cover, if used. The inflator will be properly positioned with the larger end 144 extending from the large openings 112, 120 and the smaller end 142 of the inflator extending from openings 112a, 122 as shown in Figure 4. The exit ports 145 of the inflator are located in the narrow end 142.

The module 200 includes an inflator retainer bracket 150, which is shown in Figures 1a and 7. The inflator retainer bracket 150 holds the inflator and airbag together and provides a mechanism by which the module can be secured to a mounting surface. The inflator retainer bracket 150 includes a body 152 having a base 152a that supports two threaded fasteners 154a, b that are used to mount the module to a seat frame and are useful in holding the cover 110 to the folded airbag. A part of the base 152a is bent down to form a pin 153 useful in aligning the inflator retainer bracket with a hole in the mounting surface. The inflator retainer bracket has a first end 156 that is bent about ninety degrees to the center portion, the first end includes a small opening 156a that is slightly larger than the cylindrically shaped smaller end 142 of the inflator 140 that sticks through this opening 156a; as shown in Figures 9 and 11. The inflator retainer bracket 150 has a second end 158, which is maintained at an angle relative to the center or base portion; this second end 158 includes an oval opening 18a. The second end 158 is a resilient extension of the base 152a and can rotate slightly relative to the base and holds the inflator in place as the edges of the opening bite into the material of the inflator. Referring to Figure 4, the following describes a way to secure the inflator retainer bracket 150 to the inflator 140. The opening 158a of the inflator retainer bracket is slipped about the larger end 144 of the inflator and the center portion 152a of the inflator retainer bracket aligned to the center portion of the inflator (which is inside of the airbag). In this orientation the inflator retainer bracket is outside of the airbag and that portion of the cover 110 between openings 112, 112a. In this orientation the airbag, and the cover if one is used, are against the inner side 159 of the end 158 of the inflator retainer bracket. The inflator 140 is slid further into opening 158a so that the narrow end 142 of the inflator and that part of the airbag, and the cover if one is used, proximate the opening 122 can be moved adjacent an inner side 161 of the end 156 of the inflator retainer bracket 150. The inflator 140 is moved toward the end 156 of the inflator retainer bracket and manipulated so the smaller end 142 of the inflator enters the opening 156a.

The smaller end 142 of the inflator houses an electrical connector 143 having one or more electrical contacts. The wiring harness 143a shown in Figure 9 connects to the connector 143. The electrical connector 143 is located exterior of the airbag 102, 102a. In the embodiment illustrated the inflator retainer bracket 150 is exterior to the airbag, as shown in Figures 8 and 9.

In Figures 4, 8 and 9, the larger end and the smaller end of the inflator extend from the airbag through the openings 120, 122. If a cover were used the airbag would also extend through the opening 112, 112a, which are not shown in Figures 8 and 9. Figure 9 shows the folded-over tab121 that forms a gas seal against the side of the inflator 140. When the airbag is inflated with inflation gas from the inflator, the gas gets in between the rolled or bent-over tabs 121 or tabs 121a, shown in Figures 6 and 6a, and pushes the tab 121, or tabs 121a, forcefully against the sides of the inflator forming a gas seal to limit gas leakage.

A metal lock washer 170, shown in isolation in Figures 10 and 11a, is initially concave or conical in shape, and includes an annular concave shaped body 174 and a plurality of internally extending projections 176 formed about an opening 178. After the inflator retainer bracket has assembled with the inflator, the washer 170 is placed about the smaller end 142 of the inflator extending from an end 156 of the inflator retainer bracket 150. In this configuration the inner surface 176a of each projection 176 is spaced about or touching the smaller end of the inflator and the washer rests against the outside of end 156 of the inflator retainer bracket. Thereafter the washer 170 is compressed or flattened against the end 156 of the inflator retainer bracket. This process urges the projections 176 inward to crimp or clamp against the cylindrical side of the smaller end 142 of the inflator 140 and secures the inflator to the inflator retainer bracket. When the curved or conically shaped washer is flattened, the inside diameter of the projections becomes smaller and fixes on the outside surface of the smaller end of the inflator. Figure 11 shows the washer in its flattened state. The projections 176 will resist any pulling force of the lock washer by the inflating airbag.

In another embodiment shown in Figure 11a, the features of the lock washer 170a are incorporated into the end 156 of the inflator retainer bracket that receives the smaller end of the inflator. In Figure 11 a the projections 176 of the washer 170 are formed as an integral part of the end 156 about the opening 156a Upon insertion of the smaller end 142 of the inflator in the opening 156a the washer, including projections 176, can be flattened or compressed as described above for the separate washer. By doing this one component can be eliminated leading to cost reduction.

Figure 13 shows the airbag in a partially folded state. The cover 110 is shown receiving the inflator 140 through its openings 112, 112a, secured to the airbag and has been folded above the inflator, which is underneath the cover and not visible. The cover is first pulled away from the airbag to prevent it from interfering with the airbag fold. A portion 220 of the airbag adjacent the smaller end 142 of the inflator has been folded toward the center of the airbag and an opposing portion of the airbag adjacent the larger end 144 of the inflator has been folded toward the center of the airbag. A portion of the airbag opposite the inflator has been rolled or folded toward the inflator yielding a rolled or folded portion 224. To complete this fold, the rolled or folded portion 224 is further rolled or folded bringing it up to the inflator 140 as shown in Figure 13a.

The configuration in Figure 13 is flipped upside-down with the cover below the folded airbag. If the inflator were not inserted through the cover as described above, it would still be used to hold the folded airbag in place. In this situation the openings 112, 112a are not needed and are omitted from the cover 110. Then the two small mounting holes 114 in the center-side of the cover are placed over the two receiving studs 154a, 154b of the inflator retainer bracket, as shown in Figure 14. The other two ends of the cover shown as the upper and lower flaps in Figure 13 contain one small hole 114 each. These two flaps are then pulled over to fit the small holes 114a onto the same two studs 154a, 154b of the inflator retainer bracket as shown in Figure 14 to secure the cover about the folded airbag and prevent the airbag from unfolding.

## Claims

1. A side airbag module including: an inflator (140), and airbag (102) and an inflator retainer bracket (150), the inflator (140) having inflation ports (145) and a first and second ends (142, 144), the inflator is inserted through a first opening of a first set of openings in an upper portion (104a) of a main panel (105) and configured to exit the upper portion of the main panel through a second opening of the first set of openings, wherein when the inflator (140) is in the airbag, the first and second ends of the inflator respectively extend through one of the first and second openings, **characterized in that** the main panel (105) including a lower portion (104b) connectable to the upper portion thereby forming the main panel, the lower portion including a second set of similarly shaped, spaced and aligned first and second opening through which the inflator (140) extends.

2. A side airbag module according to Claim 1 including a reinforcement panel (130) having a third set of openings (120, 122) of like size and orientation and aligned to those openings in the upper portion of the main panel, the reinforcement panel secured to the upper portion.

3. A side airbag module according to Claim 2 wherein the reinforcement panel is one of a separate piece of material or formed as an extension of the upper portion of the main panel.

4. A side airbag module according to either of Claims 2 or 3 wherein the reinforcement panel is an integral part of the upper portion and is configured to be folded about a first fold line (106a) to align the third set of inflator receiving openings in the reinforcement panel with the first set of openings in the upper portion of the main panel.

5. A side airbag module according to Claim 4 wherein the reinforcement panel includes a first part (130) with the third set of openings comprising two inflator receiving openings and a second part (130a) with a fourth set of inflator receiving openings comprising two additional inflator receiving openings, the second part configured to be folded over a second fold line to bring the fourth set of inflator openings into alignment with the third set of openings, wherein the aligned sets of openings in the reinforcement panel are themselves alignable with and are of the same size and spacing as the openings in the upper portion of the main panel.

6. A side airbag module according to any of Claims 1 - 5 wherein one of the openings into which the inflator (140) is received is configured to have material (127) about the one opening engage with a side of the inflator forming a seal to retard the flow of inflation gas through the one opening.

7. A side airbag module according to Claim 6 wherein the one opening is formed with a tab (121) bendable to a position along the side (146) of the inflator (140), the bendable tab forming a part of the seal, the materiel about an edge of the one opening forming another part of the seal.

8. A side airbag module according to Claim 7 wherein for each set of openings, one of the openings in each set is the same size as the first opening and is aligned to the first opening, the inflator (140) passing through each opening that is aligned to the first opening, and wherein for each set of openings, another of the openings in the set is the same size as the second opening and is aligned to the second opening, the inflator (140) passing out of the airbag through each opening that is aligned to the second opening.

9. A side airbag module according to Claim 8 wherein each of the openings that is respectively aligned to the first opening and to the second opening is maintained together and in alignment by at least one seam (132) of stitches.

10. A side airbag module according to any of Claims 1 - 9 wherein the first opening is a concave shaped slit.

11. A side airbag module according to any of Claims 1 - 9 wherein the first opening is a pair of intersection slits (123, 125).

12. A side airbag module according to any of Claims 1 - 11 wherein the inflator retainer bracket (150) has first and second ends (156, 158) and a connecting portion (152a) each of which is located outside of the airbag, the first end of the inflator retainer bracket secured about the first end of the inflator (140) and the second end of the inflator retainer bracket secured about the second end of the inflator.

13. A side airbag module according to any of Claims 1 -12 including a lock washer (170) received over one end of the inflator (140) and upon compression of the lock washer against the inflator retainer bracket the lock washer holds the one end of the inflator in place.

## Patentansprüche

1. Seitenairbagmodul, das Folgendes einschließt: eine Aufblasvorrichtung (140) und einen Airbag (102) und eine Aufblasvorrichtungshaltestütze (150), wobei die Aufblasvorrichtung (140) Aufblasanschlüsse (145) und ein erstes und ein zweites Ende (142, 144) hat, wobei die Aufblasvorrichtung durch eine erste Öffnung eines ersten Satzes von Öffnungen in einem oberen Abschnitt (104a) einer Hauptbahn (105) eingesetzt wird und dafür konfiguriert ist, durch eine zweite Öffnung des ersten Satzes von Öffnungen aus dem oberen Abschnitt der Hauptbahn auszutreten, wobei sich, wenn sich die Aufblasvorrichtung (140) in dem Airbag befindet, das erste und das zweite Ende der Aufblasvorrichtung jeweils durch die erste bzw. die zweite Öffnung erstrecken, **dadurch gekennzeichnet, dass** die Hauptbahn (105) einen unteren Abschnitt (104b) umfasst, der mit dem oberen Abschnitt verbunden werden kann, wodurch die Hauptbahn gebildet wird, wobei der untere Abschnitt einen zweiten Satz einer ersten und einer zweiten Öffnung, die ähnlich geformt, mit Zwischenraum angeordnet und ausgerichtet sind, einschließt, durch die sich die Aufblasvorrichtung (140) erstreckt.

2. Seitenairbagmodul nach Anspruch 1, das eine Verstärkungsbahn (130) einschließt, die einen dritten Satz von Öffnungen (120, 122) mit gleicher Größe und Ausrichtung und ausgerichtet mit jenen Öffnungen in dem oberen Abschnitt der Hauptbahn hat, wobei die Verstärkungsbahn an dem oberen Abschnitt befestigt ist.

3. Seitenairbagmodul nach Anspruch 2, wobei die Verstärkungsbahn entweder ein gesondertes Stück Material ist oder als eine Erweiterung des oberen Abschnitts der Hauptbahn geformt ist.

4. Seitenairbagmodul nach einem der Ansprüche 2 oder 3, wobei die Verstärkungsbahn ein integraler Teil des oberen Abschnitts ist und dafür konfiguriert ist, um eine erste Falzlinie (106a) gefaltet zu werden, um den dritten Satz von Aufblasvorrichtungsaufnahmeöffnungen in der Verstärkungsbahn mit dem ersten Satz von Öffnungen in dem oberen Abschnitt der Hauptbahn auszurichten.

5. Seitenairbagmodul nach Anspruch 4, wobei die Verstärkungsbahn einen ersten Teil (130) mit dem dritten Satz von Öffnungen, der zwei Aufblasvorrichtungsaufnahmeöffnungen umfasst, und einen zweiten Teil (130a) mit einem vierten Satz von Öffnungen, der zwei zusätzliche Aufblasvorrichtungsaufnahmeöffnungen umfasst, einschließt, wobei der zweite Teil dafür konfiguriert ist, über eine zweite Falzlinie gefaltet zu werden, um den vierten Satz von Aufblasvorrichtungsöffnungen in eine Ausrichtung mit dem dritten Satz von Öffnungen zu bringen, wobei die ausgerichteten Sätze von Öffnungen in der Verstärkungsbahn selbst mit den Öffnungen in dem oberen Abschnitt der Hauptbahn ausgerichtet werden können und gleiche Größe und Abstände haben wie dieselben.

6. Seitenairbagmodul nach einem der Ansprüche 1 bis 5, wobei eine der Öffnungen, in der die Aufblasvorrichtung (140) aufgenommen wird, dafür konfiguriert ist, das Material (127) um die Öffnung mit einer Seite der Aufblasvorrichtung in Eingriff zu bringen, wobei eine Dichtung geformt wird, um den Durchfluss von Aufblasgas durch die eine Öffnung zu verzögern.

7. Seitenairbagmodul nach Anspruch 6, wobei die eine Öffnung mit einer Lasche (121) geformt ist, die zu einer Stellung längs der Seite (146) der Aufblasvorrichtung (140) gebogen werden kann, wobei die Lasche einen Teil der Dichtung bildet, wobei das Material um eine Kante der einen Öffnung einen anderen Teil der Dichtung bildet.

8. Seitenairbagmodul nach Anspruch 7, wobei für jeden Satz von Öffnungen eine der Öffnungen in jedem Satz die gleiche Größe hat wie die erste Öffnung und mit der ersten Öffnung ausgerichtet ist, wobei die Aufblasvorrichtung (140) durch jede Öffnung hindurchgeht, die mit der ersten Öffnung ausgerichtet ist, und wobei für jeden Satz von Öffnungen eine andere der Öffnungen in dem Satz die gleiche Größe hat wie die zweite Öffnung und mit der zweiten Öffnung ausgerichtet ist, wobei die Aufblasvorrichtung (140) durch jede Öffnung aus dem Airbag herauskommt, die mit der zweiten Öffnung ausgerichtet ist.

9. Seitenairbagmodul nach Anspruch 8, wobei jede der Öffnungen, die jeweils mit der ersten Öffnung bzw. mit der zweiten Öffnung ausgerichtet ist, durch wenigstens eine Naht (132) von Stichen zusammen- und in Ausrichtung gehalten wird.

10. Seitenairbagmodul nach einem der Ansprüche 1 bis 9, wobei die erste Öffnung ein konkav geformter Schlitz ist.

11. Seitenairbagmodul nach einem der Ansprüche 1 bis 9, wobei die erste Öffnung ein Paar von Überschneidungsschlitzen (123, 125) ist.

12. Seitenairbagmodul nach einem der Ansprüche 1 bis 11, wobei die Aufblasvorrichtungshaltestütze (150) ein erstes und ein zweites Ende (156, 158) und einen Verbindungsabschnitt (152a) hat, die jeweils außerhalb des Airbags angeordnet sind, wobei das erste Ende der Aufblasvorrichtungshaltestütze um das erste Ende der Aufblasvorrichtung (140) befestigt ist und das zweite Ende der Aufblasvorrichtungshaltestütze um das zweite Ende der Aufblasvorrichtung befestigt ist.

13. Seitenairbagmodul nach einem der Ansprüche 1 bis 12, die eine Sicherungsscheibe (170) einschließt, die über einem Ende der Aufblasvorrichtung (140) aufgenommen wird, und wobei auf ein Zusammendrücken der Sicherungsscheibe gegen die Aufblasvorrichtungshaltestütze hin die Sicherungsscheibe das eine Ende der Aufblasvorrichtung an seinem Platz festhält.

## Revendications

1. Module de coussin gonflable latéral incluant : un gonfleur (140), un coussin gonflable (102) et un support de retenue de gonfleur (150), le gonfleur (140) comprenant des orifices de gonflage (145) et des première et seconde extrémités (142, 144), le gonfleur étant inséré à travers une première ouverture d'un premier ensemble d'ouvertures dans une partie supérieure (104a) d'un panneau principal (105) et est configuré pour sortir de la partie supérieure du panneau principal à travers une seconde ouverture du premier ensemble d'ouvertures, dans lequel, lorsque le gonfleur (140) est dans le coussin gonflable, les première et seconde extrémités du gonfleur s'étendent, respectivement, à travers l'une des première et seconde ouvertures, **caractérisé en ce que** le panneau principal (105) comprend une partie inférieure (104b) qui peut être reliée à la partie supérieure, formant ainsi le panneau principal, la partie inférieure comportant un deuxième ensemble de première et seconde ouvertures dont la forme, l'espacement et l'alignement sont similaires, à travers lesquelles le gonfleur (140) s'étend.

2. Module de coussin gonflable latéral selon la revendication 1, comprenant un panneau de renfort (130) comportant un troisième ensemble d'ouvertures (120, 122) de même dimension et de même orientation que les ouvertures de la partie supérieure du panneau principal et alignées avec celles-ci, le panneau de renfort étant fixé sur la partie supérieure.

3. Module de coussin gonflable latéral selon la revendication 2, dans lequel le panneau de renfort est soit une pièce de matériau séparée, soit formé en tant qu'extension de la partie supérieure du panneau principal.

4. Module de coussin gonflable latéral selon l'une ou l'autre des revendications 2 et 3, dans lequel le panneau de renfort est une partie intégrale de la partie supérieure et est configuré pour être plié autour d'une première ligne de pliage (106a) pour aligner le troisième ensemble d'ouvertures de réception de gonfleur dans le panneau de renfort avec le premier ensemble d'ouvertures dans la partie supérieure du panneau principal.

5. Module de coussin gonflable latéral selon la revendication 4, dans lequel le panneau de renfort comprend une première partie (130) pourvue du troisième ensemble d'ouvertures comprenant deux ouvertures de réception de gonfleur et une seconde partie (130a) pourvue d'un quatrième ensemble d'ouvertures de réception de gonfleur comprenant deux ouvertures de réception de gonfleur supplémentaires, la seconde partie étant configurée pour être pliée sur une seconde ligne de pliage pour aligner le quatrième ensemble d'ouvertures pour gonfleur avec le troisième ensemble d'ouvertures, dans lequel les ensembles d'ouvertures alignés dans le panneau de renfort ont la même dimension et le même espacement que les ouvertures de la partie supérieure du panneau principal, avec lesquelles ils peuvent eux-même être alignés.

6. Module de coussin gonflable latéral selon l'une quelconque des revendications 1 à 5, dans lequel une des ouvertures dans lesquelles le gonfleur (140) est reçu est configurée pour présenter autour de l'ouverture du matériau (127) qui entre en contact avec un côté du gonfleur, formant un joint étanche pour ralentir l'écoulement de gaz de gonflage à travers cette ouverture.

7. Module de coussin gonflable latéral selon la revendication 6, dans lequel l'ouverture est pourvue d'une patte (121) pouvant être pliée vers une position le long du côté (146) du gonfleur (140), la patte pliable formant une partie du joint étanche, le matériau autour d'un bord de l'ouverture formant une autre partie du joint étanche.

8. Module de coussin gonflable latéral selon la revendication 7, dans lequel, pour chaque ensemble d'ouvertures, une des ouvertures dans chaque ensemble a la même dimension que la première ouverture et est alignée avec la première ouverture, le gonfleur (140) passant à travers chaque ouverture qui est alignée avec la première ouverture, et dans lequel, pour chaque ensemble d'ouvertures, une autre des ouvertures de l'ensemble a la même dimension que la seconde ouverture et est alignée avec la seconde ouverture, le gonfleur (140) passant à l'extérieur du coussin gonflable à travers chaque ouverture qui est alignée avec la seconde ouverture.

9. Module de coussin gonflable latéral selon la revendication 8, dans lequel toutes les ouvertures qui sont respectivement alignées avec la première ouverture et avec la seconde ouverture sont maintenues alignées ensemble par au moins une série de points de couture (132).

10. Module de coussin gonflable latéral selon l'une quelconque des revendications 1 à 9, dans lequel la première ouverture est une fente de forme concave.

11. Module de coussin gonflable latéral selon l'une quelconque des revendications 1 à 9, dans lequel la première ouverture est une paire de fentes se croisant (123, 125).

12. Module de coussin gonflable latéral selon l'une quelconque des revendications 1 à 11, dans lequel le support de retenue de gonfleur (150) comprend des première et seconde extrémités (156, 158) et une partie de connexion (152a) qui sont toutes situées à l'extérieur du coussin gonflable, la première extrémité du support de retenue de gonfleur étant fixée autour de la première extrémité du gonfleur (140) et la seconde extrémité du support de retenue de gonfleur étant fixée autour de la seconde extrémité du gonfleur.

13. Module de coussin gonflable latéral selon l'une quelconque des revendications 1 à 12, comprenant une rondelle de blocage (170) reçue sur une extrémité du gonfleur (140), la rondelle de blocage maintenant en place cette extrémité du gonfleur lorsqu'elle est pressée contre le support de retenue de gonfleur.
